(19) Europäisches Patentamt
European Patent Office
Office européen des brevets

(11) **EP 1 233 042 B1**

(12) **EUROPÄISCHE PATENTSCHRIFT**

(45) Veröffentlichungstag und Bekanntmachung des Hinweises auf die Patenterteilung:
**24.11.2010  Patentblatt 2010/47**

(51) Int Cl.:
*C09C 1/50* (2006.01)          *C08K 3/04* (2006.01)

(21) Anmeldenummer: **02002820.5**

(22) Anmeldetag: **08.02.2002**

(54) **Russ, Verfahren zu seiner Herstellung und seine Verwendung**

Carbon black, method for producing the same and use thereof

Noir de carbone, son procédé de préparation et son utilisation

(84) Benannte Vertragsstaaten:
**AT BE CH CY DE DK ES FI FR GB GR IE IT LI LU MC NL PT SE TR**

(30) Priorität: **16.02.2001   DE 10107228**

(43) Veröffentlichungstag der Anmeldung:
**21.08.2002   Patentblatt 2002/34**

(73) Patentinhaber: **Evonik Degussa GmbH
45128 Essen (DE)**

(72) Erfinder: **Freund, Burkhard, Dr.
50374 Erftstadt (DE)**

(56) Entgegenhaltungen:
**WO-A-94/05732     DE-A- 19 839 925**

**Beschreibung**

Die Erfindung betrifft einen Ruß, ein Verfahren zu seiner Herstellung sowie seine Verwendung.

Die industriell wichtigsten Ruß-Herstellverfahren beruhen auf der oxidativen Pyrolyse von kohlenstoffhaltigen Rußrohstoffen. Hierbei werden die Rußrohstoffe bei hohen Temperaturen in Anwesenheit von Sauerstoff unvollständig verbrannt. Zu dieser Klasse von Ruß-Herstellverfahren gehören zum Beispiel das Furnaceruß-Verfahren, das Gasrußverfahren und das Flammruß-Verfahren. Als kohlenstoffhaltige Rußrohstoffe werden überwiegend mehrkernige aromatische Rußöle eingesetzt. Der Produktstrom der oxidativen Pyrolyse besteht aus einem Wasserstoff und Kohlenmonoxid enthaltenden Abgas und darin suspendiertem feinteiligen Ruß, der in einer Filteranlage vom Abgas abgetrennt wird. Der so gewonnene Ruß wird dann zur besseren Handhabung zum größten Teil in Naß- oder Trockengranulierverfahren als Perlruß konfektioniert. Die aus dem Herstellprozeß herrührende Feuchtigkeit des Rußes wird durch eine abschließende Trocknung auf unter 1 Gew.-% herabgesetzt.

Industriell hergestellte Ruße werden zu über 90 % als Füllstoff und als Verstärker bei der Herstellung von Gummimischungen eingesetzt. Ein wichtiges Einsatzgebiet sind hochgefüllte Dichtungsprofile im Automobilbau. Typische derartige Gummimischungen enthalten 20 bis 40 Gew.-% Synthesekautschuk, vorzugsweise EPDM, 20 bis 50 Gew.-% Ruß, Mineralöl und weitere Hilfsstoffe sowie Schwefel oder Peroxide als Vulkanisationsmittel.

Die Ruße beeinflussen mit ihren spezifischen Eigenschaften die Mischungsviskosität, die Spritzgeschwindigkeit und - quellung, die Füllstoffdispersion, die Härte, den Compression Set und viele weitere Eigenschaften solcher Dichtungsprofile. Für solche Profilmischungen ist eine niedrige Spritzquellung, eine hohe Spritzgeschwindigkeit, eine gute Dispergierbarkeit bei vorgegebener Härte gefordert. Dies ermöglicht eine besonders wirtschaftliche Profilherstellung.

Eine wichtige Einflußgröße ist die spezifische Oberfläche, insbesondere die CTAB-Oberfläche, welche ein Maß für den kautschukwirksamen Oberflächenanteil des Rußes ist. Mit abnehmender CTAB-Oberfläche steigen Spritzgeschwindigkeit und Dispergierbarkeit.

Weitere wichtige Rußparameter sind die DBP-Absorption als Maßzahl für die Ausgangsstruktur und die 24M4-DBP-Absorption als Maß für die nach mechanischer Beanspruchung des Rußes noch verbleibende Reststruktur. Hohe DBP-Zahlen führen zu guter Dispergierbarkeit und niedriger Spritzquellung.

Für Profilmischungen sind Ruße geeignet, die CTAB-Oberflächen zwischen 10 und 50 $m^2$/g und DBP-Absorptionswerte zwischen 80 und 160 ml/100 g aufweisen.

Aus EP 0609433 sind Furnace-Ruße mit niedriger Iodzahl und hoher DBP-Werte bekannt.

Nachteil der bekannten Ruße, trotz niedriger spezifischer Oberflächen und hoher Struktur, ist die schlechte Dispergierbarkeit bei zunehmend kritischeren Rezepturen, die auf teilkristallinen EPDM-Typen basieren, und wirtschaftlich bedingt zunehmend kürzeren Mischzeiten.

Aufgabe der vorliegenden Erfindung ist es, einen Ruß herzustellen, der in Gummiprofilmischungen bei hohen Füllgraden schneller und besser als herkömmliche Ruße dispergierbar ist und gleichzeitig eine schnelle Extrusion und niedrige Spritzquellung bewirkt.

Gegenstand der Erfindung ist ein Ruß mit einer CTAB-Oberfläche von 10 bis 35 $m^2$/g, vorzugsweise 10 bis 30 $m^2$/g, und einer DBP-Absorption von 40 bis 180 ml/100g, vorzugsweise 70 bis 160 ml/100g, welcher dadurch gekennzeichnet ist, daß der $\Delta$D50-Wert der Aggregatgrößenverteilung größer 340 nm, vorzugsweise größer 400 nm, besonders bevorzugt größer 500 nm, ist. Alle Werte der Aggregatgrößenverteilung beziehen sich auf die Gewichtsverteilung.

Der M-Wert (Quotient aus $D_w$ und $D_{mode}$) der Aggregatgrößenverteilung kann größer 2, vorzugsweise größer 2,15, besonders bevorzugt größer als 2,3, sein. Die Standardabweichung der Aggregatgrößenverteilung kann größer 300 nm sein. Das D75%/25%-Verhältnis der Aggregatgrößenverteilung kann größer 2,4 sein. Das $\Delta$DBP/DBP-Verhältnis kann größer 0,24, vorzugsweise größer 0,35, besonders bevorzugt größer 0,45, sein. Das $\dfrac{\Delta DBP \cdot 100}{DBP^2}$-Verhältnis kann größer 0,29 $(ml/100g)^{-1}$, vorzugsweise größer 0,30 $(ml/100g)^{-1}$, sein. Die Ruße können Furnaceruße sein.

Ein weiterer Gegenstand der Erfindung ist ein Verfahren zur Herstellung des erfindungsgemäßen Rußes in einem Furnacerußreaktor, welcher längs der Reaktorachse eine Verbrennungszone, eine Reaktionszone und eine Abbruchzone enthält, durch Erzeugen eines Stromes heißen Abgases in der Verbrennungszone durch vollständiges Verbrennen eines Brennstoffes in einem Sauerstoff enthaltenden Gas und Leiten des Abgases von der Verbrennungszone durch die Reaktionszone in die Abbruchzone, Einmischen eines Rußrohstoffes in das heiße Abgas in der Reaktionszone und Abstoppen der Rußbildung in der Abbruchzone durch Einsprühen von Wasser, welches dadurch gekennzeichnet ist, daß ein flüssiger und ein gasförmiger Rußrohstoff in der Engstelle eingedüst werden. Die Rußrohstoffe können mittels Radiallanzen eingedüst werden. Es können 2-64, vorzugsweise 8-32, besonders bevorzugt 12-16, Radiallanzen verwendet werden. Das Verhältnis Öl- zu Gas-Radiallanzen kann 4:1 bis 1:4, bevorzugt 1:1, betragen. Die Öl- und Gaslanzen können alternierend angeordnet sein. Die Eindringtiefe von Öl- und Gas-Radiallanzen kann dabei unterschiedlich sein.

Der flüssige Rußrohstoff kann durch Druck, Dampf, Preßluft oder den gasförmigen Rußrohstoff zerstäubt werden.

Bevorzugterweise können sowohl der gasförmige als auch der flüssige Rußrohstoff gleichzeitig an der Engstelle eingeführt werden.

Hierdurch befinden sich im Ruß Anteile, die aus dem Gas gebildet werden und solche die aus der Flüssigkeit gebildet werden.

Überraschenderweise bewirkt der Einsatz relativ kleiner Gasmengen als Rohstoff in der Engstelle eine deutliche Absenkung der spezifischen Oberfläche des Rußes. Spezifische Oberflächen kleiner 20 m$^2$/g sind somit bei moderaten Ölmengen relativ einfach und gritfrei erfindungsgemäß herzustellen. Zudem kann das Erdgas infolge anderer Pyrolysekinetik verglichen mit Rußöl eine besonders breite Aggregatgrößenverteilung bewirken.

Als Meßzahl zur Kennzeichnung des Luftüberschusses wird häufig der sogenannte K-Faktor verwendet. Es handelt sich bei dem K-Faktor um das Verhältnis der für eine stöchiometrische Verbrennung des Brennstoffes benötigten Luftmenge zu der tatsächlich der Verbrennung zugeführten Luftmenge. Ein K-Faktor von 1 bedeutet also eine stöchiometrische Verbrennung. Bei Luftüberschuß ist der K-Faktor kleiner 1. Dabei können wie bei bekannten Rußen K-Faktoren zwischen 0,2 und 0,9 angewendet werden. Bevorzugt kann mit K-Faktoren zwischen 0,2 und 0,5 gearbeitet werden.

Als flüssiger Rußrohstoff können flüssige aliphatische oder aromatische, gesättigte oder ungesättigte Kohlenwasserstoffe oder Mischungen hiervon, Destillate aus dem Steinkohlenteer oder Rückstandsöle, die beim katalytischen Cracken von Erdölfraktionen beziehungsweise bei der Olefinherstellung durch Cracken von Naphtha oder Gasöl entstehen, eingesetzt werden.

Als gasförmiger Rußrohstoff können gasförmige aliphatische, gesättigte oder ungesättigte Kohlenwasserstoffe, Mischungen hiervon oder Erdgas eingesetzt werden.

Das beschriebene Verfahren ist nicht auf eine bestimmte Reaktorgeometrie beschränkt. Es kann vielmehr auf verschiedene Reaktortypen und Reaktorgrößen angepaßt werden.

Als Rußrohstoff-Zerstäuber können sowohl reine Druckzerstäuber (Einstoffzerstäuber) als auch Zweistoffzerstäuber mit innerer oder äußerer Mischung eingesetzt werden, wobei als Zerstäubungsmedium der gasförmige Rußrohstoff verwendet werden kann. Die vorstehend beschriebene Kombination eines flüssigen mit einem gasförmigen Rußrohstoff kann also zum Beispiel durch Verwendung des gasförmigen Rußrohstoffs als Zerstäubungsmedium für den flüssigen Rußrohstoff realisiert werden.

Es können zur Zerstäubung von flüssigem Rußrohstoff Zweistoffzerstäuber eingesetzt werden. Während bei Einstoffzerstäubern eine Änderung des Durchsatzes auch zu einer Änderung der Tröpfchengröße führen kann, kann die Tröpfchengröße bei Zweistoffzerstäubern weitgehend unabhängig vom Durchsatz beeinflußt werden.

Bei gleichzeitiger Verwendung von Rußöl und gasförmigen Kohlenwasserstoffen, wie zum Beispiel Methan, als Rußrohstoff, können die gasförmigen Kohlenwasserstoffe getrennt vom Rußöl über einen eigenen Satz von Gaslanzen in den Strom des heißen Abgases injiziert werden.

Der erfindungsgemäße Ruß kann als Verstärkerruß in Gummimischungen, insbesondere für Extrusionsprofile, verwendet werden.

Ein weiterer Gegenstand der Erfindung sind Kautschukmischungen, welche dadurch gekennzeichnet sind, daß sie Kautschuk, den erfindungsgemäßen Ruß, gegebenenfalls gefällte Kieselsäure, Organosilan und/oder weitere Kautschukhilfsmittel enthalten.

Für die Herstellung erfindungsgemäßer Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u.a.

Polybutadien (BR)

Polyisopren (IR)

Styrol/Butadien-Copolymerisate mit Styrolgehalten von 1 bis 60, vorzugsweise 5 bis 50 Gew.-% (SBR)

Isobutylen/Isopren-Copolymerisate (IIR)

Butadien/Acrylnitril-Copolymere mit Acrylnitrilgehalten von 5 bis 60, vorzugsweise 10 bis 50 Gew. -% (NBR)

Ethylen/Propylen/Dien-Copolymerisate (EPDM)

sowie Mischungen dieser Kautschuke.

Die erfindungsgemäßen Kautschukmischungen können weitere Kautschukhilfsprodukte enthalten wie unter anderem Reaktionsbeschleuniger, -verzögerer, Alterungsschutzmittel, Stabilisatoren, Verarbeitungshilfsmittel, Weichmacher, Wachse, Metalloxide sowie Aktivatoren, wie Triethanolamin, Polyethylenglykol, Hexantriol, die der Kautschukindustrie bekannt sind.

Die Kautschukhilfsmittel werden in üblichen Mengen, die sich unter anderem nach dem Verwendungszweck richten, eingesetzt. Übliche Mengen sind zum Beispiel Mengen von 0,1 bis 50 Gew.-% bezogen auf Kautschuk.

Als Vernetzer können Schwefel, organische Schwefelspender oder Radikalbildner dienen. Die erfindungsgemäßen Kautschukmischungen können darüber hinaus Vulkanisationsbeschleuniger enthalten.

Beispiele für geeignete Vulkanisationsbeschleuniger sind Mercaptobenzthiazole, Sulfenamide, Guanidine, Thiurame, Dithiocarbamate, Thioharnstoffe und Thiocarbonate.

Die Vulkanisationsbeschleuniger und Vernetzer können in Mengen von 0,1 bis 10 Gew.-%, bevorzugt 0,1 bis 5 Gew.-%, bezogen auf Kautschuk, eingesetzt werden.

Die Abmischung der Kautschuke mit dem Füllstoff, gegebenenfalls Kautschukhilfsmitteln und der Organosilane kann in üblichen Mischaggregaten, wie Walzen, Innenmischern und Mischextrudern, durchgeführt werden. Üblicherweise werden solche Kautschukmischungen im Innenmischern hergestellt, wobei zunächst in einer oder mehreren aufeinanderfolgenden thermomechanischen Mischstufen die Kautschuke, der erfindungsgemäße Ruß, gegebenenfalls die Kieselsäure und das Organosilane und die Kautschukhilfsmittel bei 100 bis 170°C eingemischt werden. Dabei kann sich die Zugabereihenfolge und der Zugabezeitpunkt der Einzelkomponenten entscheidend auf die erhaltenen Mischungseigenschaften auswirken. Die so erhaltene Kautschukmischung wird dann üblicherweise in einem Innenmischer oder auf einer Walze bei 40-110°C mit den Vernetzungschemikalien versetzt und zur sogenannten Rohmischung für die nachfolgenden Prozeßschritte, wie zum Beispiel Formgebung und Vulkanisation, verarbeitet.

Die Vulkanisation der erfindungsgemäßen Kautschukmischungen kann bei Temperaturen von 80 bis 200°C, bevorzugt 130 bis 180°C, gegebenenfalls unter Druck von 10 bis 200 bar erfolgen.

Die erfindungsgemäßen Kautschukmischungen eignen sich zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsolen, Dichtungsringen, Profilen und Dämpfungselementen.

Der erfindungsgemäße Ruß hat die Vorteile einer verbesserten Dispersion, verminderter Spritzquellung und verbesserter Wirtschaftlichkeit durch hohe Füllgrade.

Die erfindungsgemäßen Ruße zeichnen sich in niedrig viskosen Gummimischungen durch besonders günstiges Disperionsverhalten aus.

## Beispiele

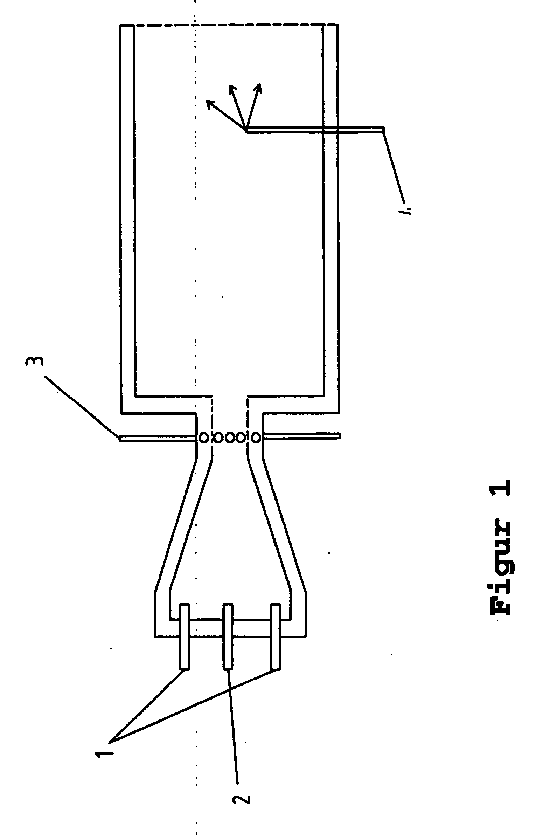

Eine Reihe von erfindungsgemäßen Rußen wird in dem in Figur 1 dargestellten Rußreaktor hergestellt.

Figur 1 zeigt einen Längsschnitt durch den Furnacereaktor. Der Rußreaktor besitzt eine Brennkammer, in der das heiße Prozeßgas für die Pyrolyse des Rußöles durch Verbrennen von Erdgas unter Zufuhr von einem Überschuß an Luftsauerstoff erzeugt wird.

Die Zufuhr der Verbrennungsluft und des Brennstoffes erfolgt über die Öffnungen 1 in der Stirnwand der Brennkammer. Die Brennkammer läuft konisch auf die Engstelle zu. Der Rußrohstoff wird über Radiallanzen 2 in der Engstelle eingedüst. Nach Durchqueren der Engstelle expandiert das Reaktionsgasgemisch in die Reaktionskammer.

In der Abbruchzone wird durch die Quenchwasser-Lanze 3 Wasser eingesprüht.

Die Abmessungen der verwendeten Reaktoren sind der folgenden Aufstellung zu entnehmen:

|  | I | II |
|---|---|---|
| Größter Durchmesser der Brennkammer | 930 mm | 1143 mm |
| Länge der Brennkammer bis Engstelle | 2127 mm | 1985 mm |
| Länge des konischen Teils der Brennkammer | 1307 mm | 1180 mm |
| Durchmesser der Engstelle | 114 mm | 260 mm |
| Länge der Engstelle | 80 mm | 320 mm |
| Durchmesser der Reaktionskammer | 875 mm | 1400 mm |
| Maximale Position der Quenchwasserlanze(n) [1] | 9705 mm | 14750 mm |

[1] gemessen vom Eintritt in die Engstelle (+: nach Eintritt -: vor Eintritt)

Zur Herstellung der erfindungsgemäßen Ruße werden als Brennstoff Erdgas und ein Rußöl mit einem Kohlenstoffgehalt von 91,3 Gew.-% und einem Wasserstoffgehalt von 7,87 Gew.-% eingesetzt.

Die Reaktorparameter für die Herstellung der erfindungsgemäßen Ruße sind in Tabelle 1 aufgeführt. Es werden 6 verschiedene Ruße hergestellt (Ruße R1 bis R6). Die Herstellbedingungen unterschieden sich insbesondere bezüglich der Menge des in der Engstelle injizierten Rußöles und Erdgases.

Die hergestellten Ruße werden vor der Charakterisierung und Einarbeitung in die Gummimischungen nach den üblichen Verfahren naß geperlt.

Tabelle 1:

| Reaktor | | I | | | | II | |
|---|---|---|---|---|---|---|---|
| Reaktorparameter | Einheit | R1 | R2 | R3 | R4 | R5 | R6 |
| Verbrennungsluft | $Nm^3/h$ | 1800 | 1800 | 1800 | 1800 | 6800 | 5300 |
| Temperatur der Verbrennungsluft | ˚C | 492 | 490 | 496 | 520 | 640 | 520 |
| Brennstoff (Erdgas) | $Nm^3/h$ | 67 | 67 | 67 | 67 | 108 | 155 |
| Rußöl | Kg/h | 730 | 830 | 675 | 780 | 3950 | 3150 |
| Rußöl-Temperatur | ˚C | 148 | 116 | 118 | 121 | 170 | 170 |
| Erdgas in der Engstelle | $Nm^3/h$ | 10 | 10 | 10 | 10 | 140 | 160 |
| Additiv ($K_2CO_3$) | g/h | - | - | 15 | - | - | - |
| Quenchposition[1] | mm | 9705 | 8290 | 9705 | 8290 | 14750 | 14750 |
| [1]Gemessen vom Eintritt in die Engstelle | | | | | | | |

Die rußanalytischen Kenndaten der hergestellten Ruße werden nach folgenden Normen ermittelt und sind in Tabelle 2 aufgeführt:

| | |
|---|---|
| CTAB-Oberfläche: | ASTM D-3765 |
| Jodzahl | ASTM D 1510 |
| STSA | ASTM D 4820/5816 |
| DBP-Absorption: | ASTM D-2414 |
| 24M4-DBP-Absorption: | ASTM D-3493 |

Der ΔDBP-Wert wird berechnet durch Subtraktion des 24M4-DBP-Absorption-Wertes von dem DBP-Absorption-Wert.

Zur Messung der Aggregatgrößenverteilungskurven wird eine Scheibenzentrifuge BI-DCP mit Rotlicht-Diode der Firma Brookhaven verwendet. Dieses Gerät wird speziell für die Bestimmung von Aggregatgrößenverteilungskurven von feinteiligen Feststoffen aus Extinktionsmessungen entwickelt und ist mit einem automatischen Meß- und Auswertungsprogramm zur Ermittlung der Aggregatgrößenverteilung ausgerüstet.

Zur Durchführung der Messungen wird zunächst eine Dispersionslösung aus 200 ml Ethanol, 5 Tropfen Ammoniaklösung und 0,5 g Triton X-100 und Auffüllen mit demineralisiertem Wasser auf 1000 ml hergestellt. Weiterhin wird eine Spinflüssigkeit aus 0,5 g Triton X-100, 5 Tropfen Ammoniaklösung und Auffüllen mit demineralisiertem Wasser auf 1000 ml angefertigt.

Danach werden 20 mg Ruß mit 20 ml Dispersionslösung versetzt und in einem Kühlbad für die Dauer von 4,5 Minuten mit 100 Watt Ultraschalleistung (80% Pulse) in der Lösung suspendiert.

Vor Beginn der eigentlichen Messungen wird die Zentrifuge 30 Minuten bei einer Drehzahl von 11000 $min^{-1}$ betrieben. In die sich drehende Scheibe wird 1 ml Ethanol eingespritzt und danach vorsichtig mit 15 ml Spinflüssigkeit unterschichtet. Nach etwa einer Minute werden 250 $\mu$l der Rußsuspension eingespritzt und das Meßprogramm des Gerätes gestartet und die Spinflüssigkeit in der Zentrifuge mit 50 $\mu$l Dodecan überschichtet. Von jeder zu messenden Probe wird eine Doppelbestimmung vorgenommen.

Die Auswertung der Rohdatenkurve erfolgt dann mit dem Rechenprogramm des Gerätes unter Berücksichtigung der Streulichtkorrektur und mit automatischer Basislinien-Anpassung.

Der ΔD50-Wert ist die Breite der Aggregatgrößenverteilungskurve bei der halben Peakhöhe. Der $D_w$-Wert ist der Gewichtsmittelwert der Aggregatgrößenverteilung. Der $D_{mode}$-Wert ist die Aggregatgröße mit der größten Häufigkeit (Peakmaximum der Aggregatgrößenverteilungskurve). Der M-Wert ist der Quotient aus $D_w$ und $D_{mode}$. Das D75%/25%-Verhältnis berechnet sich aus dem Quotienten des Teilchendurchmessers bei dem 75% der Teilchen kleiner und 25 % der Teilchen größer sind und dem Teilchendurchmesser bei dem 25% der Teilchen kleiner und 75% größer sind, bezogen auf die Summen-Gewichtsaggregatgrößenverteilung.

Tabelle 2:

| Ruß | | I | | | | II | |
|---|---|---|---|---|---|---|---|
| | | R1 | R2 | R3 | R4 | R5 | R6 |
| CTAB | $m^2/g$ | 20 | 17 | 19 | 25 | 18 | 18 |
| Jodzahl | mg/g | 18 | 16 | 16 | 24 | 14 | 14 |
| STSA | $m^2/g$ | 19 | 16 | 18 | 24 | 16 | 16 |
| DBP | ml/100g | 141 | 118 | 79 | 149 | 131 | 138 |
| CDBP | ml/100g | 76 | 76 | 60 | 79 | 73 | 75 |
| $\Delta$DBP | ml/100g | 65 | 42 | 19 | 70 | 68 | 73 |
| $\Delta$DBP/DBP | | 0,46 | 0,36 | 0,24 | 0,47 | 0,52 | 0,53 |
| $\dfrac{\Delta DBP \times 100}{DBP^2}$ | $(ml/100g)^{-1}$ | 0,33 | 0,30 | 0,30 | 0,32 | 0,40 | 0,38 |
| $D_w$ | nm | 523 | 555 | 558 | 429 | 511 | 497 |
| $D_{mode}$ | nm | 153 | 161 | 317 | 195 | 223 | 213 |
| M-Wert | | 3,42 | 3,45 | 2,2 | 2,94 | 2,29 | 2,33 |
| $\Delta$ D50 | nm | 576 | 621 | 512 | 437 | 398 | 350 |
| s | nm | 307 | 326 | 287 | 267 | 304 | 317 |
| D 75%/25% | | 2,54 | 2,57 | 2,58 | 2,48 | 2,45 | 2,49 |

**Beispiel**

Die für die Kautschukmischungen verwendete Rezeptur ist in der folgenden Tabelle 3 angegeben. Dabei bedeutet die Einheit phr Gewichtsanteile bezogen auf 100 Teile des eingesetzten Rohkautschuks. Das allgemeine Verfahren zur Herstellung von Kautschukmischungen und deren Vulkanisate ist in dem folgenden Buch beschrieben: "Rubber Technology Handbook", W. Hofmann, Hanser Verlag 1994.

Der Referenzruss 1 hat eine Iodzahl von 21,7 mg/g, CTAB von 24,3 $m^2/g$, DBP von 115,9 ml/100 g, CDBP von 78,0 ml/100 g und ein $\Delta$D50-Wert von 296 nm.

Tabelle 3

| Substanz | C1 (phr) | C2 (phr) |
|---|---|---|
| **1. Stufe** | | |
| Buna EP G 5455 | 150 | 150 |
| Referenzruß 1 | 130 | - |
| Ruß R1 | - | 130 |
| ZnO | 5 | 5 |
| Stearinsäure | 2 | 2 |
| Lipoxol 4000 (PEG) | 5 | 5 |
| Paraffinisches Öl | 50 | 50 |
| **2. Stufe** | | |
| Batch Stufe 1 | | |
| MBT | 1 | 1 |
| TBzTD | 1,2 | 1,2 |
| Renocure TP/S | 2 | 2 |
| Schwefel | 1,5 | 1,5 |

Bei dem Polymer EP G 5455 von Bayer AG handelt es sich um ein EPDM-Polymer.

Der Referenzruß 1 ist EB 160, ein konventionell hergestellter Furnace Ruß, der Degussa AG.

Lipoxol 4000 (PEG) von Hüls AG ist ein Polyethylenglykol Aktivator.

Paraffinisches Öl von Sun Oil Company (Belgium) N.V. ist ein Weichmacheröl.

MBT (Vulkazit Mercapto C) von Bayer AG ist ein Vulkanisationsbeschleuniger.

TBzTD (PerKacit TBzTD) von Akzo Chemie GmbH ist ein zweiter Vulkanisationsbeschleuniger.

Renocure TP/S von Rhein Chemie Rheinau GmbH ist ein Vulkanisationsbeschleuniger.

Die Kautschuckmischungen werden in einem Innenmischer entsprechend der Mischvorschrift in Tabelle 4 hergestellt.

Tabelle 4

| Stufe 1 | |
|---|---|
| **Einstellungen** | |
| Mischaggregat | Werner & Pfleiderer GK 1,5 E |
| Drehzahl | 60 min$^{-1}$ |
| Stempeldruck | 5,5 bar |
| Leervolumen | 1,58 L |
| Füllgrad | 0,56 |
| Durchflußtemp. | 70˚C |
| **Mischvorgang** | |
| 0 bis 1 min | Buna EP G 5455, Ruß, ZnO, Stearinsäure, paraffinisches Öl |
| 1 min | säubern, Lipoxol 4000 |
| 1 bis 5 min | Mischen |
| 5 min | Ausfahren |
| Batch-Temp. | 110-130 ˚C |
| Lagerung | 24 h bei Raumtemperatur |
| **Stufe 2** | |
| **Einstellungen** | |
| Mischaggregat | Werner & Pfleiderer GK 1,5 E |
| Drehzahl | 50 min$^{-1}$ |
| Stempeldruck | 5,5 bar |
| Leervolumen | 1,58 L |
| Füllgrad | 0,54 |
| Durchflußtemp. | 70˚C |
| **Mischvorgang** | |
| 0 bis 2 min | Batch Stufe 1, MBT, TBzTD, Schwefel, Rhenocure TP/S |
| 2 min | Ausfahren |
| Batch-Temp. | 90-105˚C |

In Tabelle 5 sind die Methoden für die Gummitestung zusammengestellt.

**Tabelle 5**

| Physikalische Testung | Norm/Bedingungen |
|---|---|
| ML 1+4, 100˚C | DIN 53523/3, ISO 667 |
| Zugversuch am Ring, 23˚C | DIN 53504, ISO 37 |
| Zugfestigkeit (MPa) Spannungswerte (MPa) Bruchdehnung (%) | |
| Shore-A-Härte, 23˚C (SH) | DIN 53 505 |

(fortgesetzt)

| Physikalische Testung | Norm/Bedingungen |
|---|---|
| Ball Rebound, 23°C (%) | ASTM D 5308 |
| Dispersion Phillips ( ) | ISO/DIS 11345 |
| Dispersion Rauhigkeit/Topographie | gemäß DE-PS 19917975 |

In dem Beispiel wird die Referenzmischung C1 mit der Mischung C2, die den erfindungsgemäßen Ruß R1 enthält, verglichen.

Tabelle 6 zeigt die Ergebnisse der gummitechnischen Prüfung. Die Mischungen werden 12 Minuten bei 170°C vulkanisiert.

**Tabelle 6**

| | | C1 | C2 |
|---|---|---|---|
| ML (1+4) | (MU) | 48 | 49 |
| Shore-A-Härte | (SH) | 56 | 56 |
| Zugfestigkeit | (MPa) | 8,7 | 8,2 |
| Spannungswert 100 % | (MPa) | 2,3 | 2,1 |
| Spannungswert 300 % | (MPa) | 7,3 | 6,7 |
| Bruchdehnung | (%) | 380 | 390 |
| Ball rebound | (%) | 59,3 | 60,1 |
| Dispersion Phillips | ( ) | 6 | 8 |
| Dispersion Rauhigkeit/Topographie<br>Ra<br>Pc<br>Anzahl Peaks 2-5 $\mu$m<br>Anzahl Peaks 5- 10 $\mu$m<br>Anzahl Peaks 10 - 15 $\mu$m<br>Anzahl Peaks > 15 $\mu$m<br>Peakfläche | <br>[$\mu$m]<br>[1/cm]<br>[-]<br>[-]<br>[-]<br>[-]<br>[%] | <br>0,764<br>30<br>224<br>71<br>10<br>5<br>9 | <br>0,234<br>1<br>16<br>5<br>0<br>0<br>0,8 |

Wie man anhand der Daten in Tabelle 6 eindeutig erkennt, ist die Dispersion der Mischung C2 mit dem erfindungsgemäßen Ruß deutlich verbessert gegenüber der Referenz C1.

**Patentansprüche**

1.  Ruß mit einer CTAB-Oberfläche von 10 bis 35 m$^2$/g und einer DBP-Absorption von 40 bis 180 ml/100g, **dadurch gekennzeichnet, daß** der $\Delta$D50-Wert der Aggregatgrößenverteilung größer 340 nm und der M-Wert der Aggregatgrößenverteilung größer 2 ist.

2.  Ruß nach Anspruch 1, **dadurch gekennzeichnet, daß** die Standardabweichung der Aggregatgrößenverteilung größer 300 nm ist.

3.  Ruß nach Anspruch 1, **dadurch gekennzeichnet, daß** das D 75 %/25 %-Verhältnis der Aggregatgrößenverteilung größer 2,4 ist.

4.  Ruß nach Anspruch 1,
    **dadurch gekennzeichnet,**
    **daß** das $\Delta$DBP/DBP-Verhältnis größer 0,35 ist.

**5.** Ruß nach Anspruch 1,
**dadurch gekennzeichnet,**

**daß** das $\dfrac{\Delta DBP \bullet 100}{DBP^2}$ - Verhältnis größer 0,29 (ml/100g)$^{-1}$ ist.

**6.** Verfahren zur Herstellung des Rußes nach Anspruch 1 in einem Furnacerußreaktor, welcher längs der Reaktorachse eine Verbrennungszone, eine Reaktionszone und eine Abbruchzone enthält, durch Erzeugen eines Stromes heißen Abgases in der Verbrennungszone durch vollständiges Verbrennen eines Brennstoffes in einem Sauerstoff enthaltenden Gas und Leiten des Abgases von der Verbrennungszone durch die Reaktionszone in die Abbruchzone, Einmischen eines Rußrohstoffes in das heiße Abgas in der Reaktionszone und Abstoppen der Rußbildung in der Abbruchzone durch Einsprühen von Wasser, **dadurch gekennzeichnet, daß** ein flüssiger und ein gasförmiger Rußrohstoff in der Engstellemittels Radiallanzen eingedüst werden und die Eindringtiefen von Öl- und Gas-Radiallanzen unterschiedlich sind.

**7.** Verwendung des Rußes nach Anspruch 1 als Verstärkerruß in Gummimischungen.

**8.** Verwendung des Rußes nach Anspruch 1 als Verstärkerruß in Extrusionsprofilen.

**9.** Kautschukmischungen, **dadurch gekennzeichnet, daß** sie Kautschuk, den Ruß gemäß Anspruch 1, gegebenenfalls gefällte Kieselsäure, Organosilan und/oder weitere Kautschukhilfsmittel enthalten.

**Claims**

**1.** Carbon black having a CTAB surface area of from 10 to 35 m$^2$/g and a DBP absorption of from 40 to 180 ml/100 g, **characterized in that** the $\Delta$D50 value of the aggregate size distribution is greater than 340 nm and the M value of the aggregate size distribution is greater than 2.

**2.** Carbon black according to Claim 1, **characterized in that** the standard deviation of the aggregate size distribution is greater than 300 nm.

**3.** Carbon black according to Claim 1, **characterized in that** the D 75%/25% ratio of the aggregate size distribution is greater than 2.4.

**4.** Carbon black according to Claim 1, **characterized in that** the $\Delta$DBP/DBP ratio is greater than 0.35.

**5.** Carbon black according to Claim 1, **characterized in that** the $\dfrac{\Delta DBP \bullet 100}{DBP^2}$ ratio is greater than 0.29 (ml/100 g)$^{-1}$.

**6.** Process for producing the carbon black according to Claim 1 in a furnace-black reactor which comprises, along the reactor axis, a combustion zone, a reaction zone and a termination zone, via production of a stream of hot exhaust gas in the combustion zone via complete combustion of a fuel in an oxygen-containing gas and passage of the exhaust gas from the combustion zone via the reaction zone into the termination zone, mixing a carbon black feedstock into the hot exhaust gas in the reaction zone, and termination of carbon-black formation in the termination zone via spraying in water, **characterized in that** a liquid and a gaseous carbon black feedstock are injected in the narrowest section, by means of radial lances, and the depths of penetration of the radial lances for oil and the radial lances for gas are different.

**7.** Use of the carbon black according to Claim 1 as reinforcing carbon black in rubber mixtures.

**8.** Use of the carbon black according to Claim 1 as reinforcing carbon black in extrusion profiles.

**9.** Rubber mixtures **characterized in that** they comprise rubber, the carbon black according to Claim 1, optionally precipitated silica, organosilane and/or further rubber auxiliaries.

**Revendications**

1.  Suie avec une surface CTAB de 10 à 35 m$^2$/g et une absorption de DBP de 40 à 180 ml/100 g, **caractérisée en ce que** la valeur ΔD50 de la répartition des tailles des agrégats est supérieure à 340 nm et la valeur M de la répartition des tailles des agrégats est supérieure à 2.

2.  Suie selon la revendication 1, **caractérisée en ce que** la déviation standard de la répartition des tailles des agrégats est supérieure à 300 nm.

3.  Suie selon la revendication 1, **caractérisée en ce que** le rapport D 75%/25% de la répartition des tailles des agrégats est supérieur à 2,4.

4.  Suie selon la revendication 1, **caractérisée en ce que** le rapport ΔDBP/DBP est supérieur à 0,35.

5.  Suie selon la revendication 1, **caractérisée en ce que** le rapport $\dfrac{\Delta DBP*100}{DBP^2}$ est supérieur à 0,29 (ml/100 g)$^{-1}$.

6.  Procédé pour la préparation de la suie selon la revendication 1 dans un réacteur à noir de carbone, qui contient le long de l'axe du réacteur une zone de combustion, une zone de réaction et une zone d'interruption, par production d'un flux d'effluent gazeux chaud dans la zone de combustion par la combustion complète d'un carburant dans un gaz contenant de l'oxygène et guidage de l'effluent gazeux de la zone de combustion au travers de la zone de réaction dans la zone d'interruption, incorporation par mélange d'une matière brute de suie dans l'effluent gazeux dans la zone de réaction et arrêt de la formation de suie dans la zone d'interruption par nébulisation d'eau, **caractérisé en ce qu'**on injecte une matière première de suie liquide et une matière première de suie sous forme gazeuse dans le goulot au moyen de lances radiales et les profondeurs de pénétration des lances radiales pour l'huile et le gaz sont différentes.

7.  Utilisation de la suie selon la revendication 1 comme suie de renforcement dans des mélanges de caoutchouc.

8.  Utilisation de la suie selon la revendication 1 comme suie de renforcement dans des profilés extrudés.

9.  Mélanges de caoutchouc, **caractérisés en ce qu'**ils contiennent du caoutchouc, la suie selon la revendication 1, le cas échéant de la silice précipitée, un organosilane et/ou d'autres adjuvants du caoutchouc.

Figur 1

EP 1 233 042 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0609433 A
- DE 19917975 C